# EUROPÄISCHE PATENTANMELDUNG

(11) **EP 2 131 216 A2**
(43) Veröffentlichungstag der Anmeldung: **09.12.2009**
(21) Anmeldenummer: 09007068.1
(22) Anmeldetag: 27.05.2009
(51) Int. Cl.: G02B 5/08, G02B 7/182

(54) **Kontrollspiegel**

(30) Priorität: 04.06.2008 DE 202008007480 U
(71) Anmelder: FIRMA ING. KLAUS EBINGER, D-51149 Köln (DE)
(72) Erfinder: Neil, Thorsten, 54552 Dreis-Brück (DE)
(74) Vertreter: Heim, Hans-Karl

(57) **Zusammenfassung**

Die Erfindung betrifft einen Kontrollspiegel mit einem stielartigen Bedienelement, einem Fahrschemel und einem Spiegel, wobei der Spiegel auf dem Fahrschemel vorgesehen ist und das Bedienelement gelenkig mit dem Fahrschemel verbunden ist. Sie ist dadurch weitergebildet, dass der Spiegel an dem Fahrschemel wippenartig angelenkt ist, dass zum Variieren eines Winkels zwischen dem Spiegel und dem Fahrschemel eine mechanische Einstelleinrichtung vorhanden ist und dass zum Bedienen der Einstelleinrichtung eine mechanische Fernsteuereinrichtung vorgesehen ist.

## Beschreibung

Die Erfindung betrifft einen Kontrollspiegel mit einem stielartigen Bedienelement, einem Fahrschemel und einem Spiegel. Hierbei ist der Spiegel auf dem Fahrschemel vorgesehen und das Bedienelement gelenkig mit dem Fahrschemel verbunden. Derartige Kontrollspiegel werden zur optischen Überprüfung von Fahrzeugunterböden bei Sicherheitskontrollen verwendet, um sicherheitsrelevante Einrichtungen beispielsweise vor terroristischen Angriffen zu schützen.

Grundsätzlich besteht bei der Unterbodenkontrolle eines Fahrzeuges das Problem, dass das untersuchende Personal auch Vertiefungen und die Rahmenkonstruktion des Unterbodens einsehen sollte. Aus diesem Grund sind Kontrollspiegel mit einem fest angebrachten Spiegel nachteilig und konnten sich nicht durchsetzen. Daher wurde versucht, Kontrollspiegel mit einem elektrisch verstellbaren Spiegel zu konstruieren. Hierbei hat sich allerdings herausgestellt, dass die Herstellung sehr kostenaufwendig war. Außerdem wird für die Bedienung eine große Feinfühligkeit des Bedienpersonals benötigte, um eine optimale Winkelstellung zu erreichen. Dies war bei den Kontrollen, welche unter einem gewissen Zeitdruck durchgeführt werden, nicht zuverlässig und ausreichend durchführbar.

Andererseits sind Kontrollspiegel bekannt, welche lediglich einen fest befestigten Spiegel an einem Stab aufweisen. Bei derartigen Konstruktionen ergeben sich allerdings die Probleme, dass es ebenfalls unter Umständen schwer ist, einen optimalen Blickwinkel auf den Fahrzeugunterboden bereitzustellen. Außerdem haben diese Konstruktionen den Nachteil, dass sie von der Bedienperson in der Hand und in der Luft gehalten werden müssen. Hierdurch ist es schwierig, den Spiegel an einer konstanten Position zu halten, welche allerdings für eine zuverlässige Kontrolle des Unterbodens notwendig ist.

Der Erfindung liegt die **Aufgabe** zugrunde, einen Kontrollspiegel zu schaffen, der eine zuverlässige Kontrolle von Fahrzeugunterböden ermöglicht.

Diese Aufgabe wird erfindungsgemäß durch einen Kontrollspiegel mit den Merkmalen des Anspruchs 1 gelöst.

Weitere vorteilhafte Ausführungen sind in den abhängigen Ansprüchen, der Beschreibung sowie den Figuren und deren Beschreibung angegeben.

Gemäß dem Anspruch 1 ist der Spiegel des Kontrollspiegels wippenartig an dem Fahrschemel angelegt. Außerdem ist zum Variieren des Winkels zwischen dem Spiegel und dem Fahrschemel eine mechanische Einstelleinrichtung vorhanden. Zum Bedienen dieser mechanischen Einstelleinrichtung ist eine mechanische Fernsteuereinrichtung vorgesehen. Über das Variieren des Winkels zwischen Spiegel und Fahrschemel können unterschiedliche Bereiche des Unterbodens eines Fahrzeuges, wie beispielsweise eines KFZs oder LKWs, besonders gut eingesehen werden.

Ein Grundgedanke der Erfindung liegt darin, die Verstellbarkeit des Winkels zwischen Spiegel und Fahrschemel durch möglichst einfache und robuste Einrichtungen auszuführen. Dies wird einerseits durch eine relativ einfach ausführbare wippenartige Anlenkung des Spiegels am Fahrschemel ausgeführt. Derartige einfache Gelenke, die zumindest in einer Dimension bewegbar sind, sind kostengünstig und einfach zu integrieren. Außerdem weisen die Gelenke aufgrund ihrer Simplizität eine hohe Zuverlässigkeit und Robustheit auf, so dass sie auch bei schwierigen Außenbedingungen, wie in wüstenähnlichen Gebieten, eingesetzt werden können.

Andererseits wird bewusst auf elektrische störungsanfällige Einrichtungen zum Variieren des Winkels verzichtet. Entsprechend der Erfindung wird dies durch eine mechanische Einstelleinrichtung mit einer ebenfalls mechanisch ausgeführten Fernsteuereinrichtung durchgeführt. Auch hier steht im Wesentlichen eine Robustheit dieser Ausführung im Vordergrund. Zusätzlich bietet sie den Vorteil, dass bei einer mechanischen Steuereinrichtung die Einstellung relativ intuitiv erfolgen kann, und so die Konzentration eines Benutzers eines derartigen Kontrollspiegels auf dem zu untersuchenden Objekt und nicht auf der Bedienung des Kontrollspiegels liegt.

Grundsätzlich sind verschiedene mechanische Fernsteuereinrichtungen denkbar. Als bevorzugte Ausführungsform wird jedoch ein Bowdenzug gewählt. Dieser ist störunanfällig und erfordert kaum Wartungsaufwand.

Bevorzugt ist zur Bedienung des Bowdenzugs am stielartigen Bedienelement ein Handgriffbügel zur Betätigung der den Bowdenzug aufweisenden mechanischen Fernsteuereinrichtung vorgesehen. Dieser Handgriff kann beispielsweise in Art eines Fahrradhandbremsengriffs ausgeführt sein. Eine Handhabung dieses Handgriffbügels ist intuitiv und benötigt kaum Aufmerksamkeit.

In einer vorteilhaften Ausführungsform ist das Bedienelement winkelverstellbar relativ zum Fahrschemel vorgesehen. Hierdurch ist es möglich, den Kontrollspiegel weit unter ein zu untersuchendes Fahrzeug zu schieben, indem das Bedienelement stark geneigt wird. Gerade bei derartigen Einsatzzwecken ist die einfache Verstellbarkeit des Winkels zwischen Spiegel und Fahrschemel wichtig, da ansonsten keine ausreichende optische Kontrolle des Unterbodens erfolgen könnte.

Es ist bevorzugt, wenn im Rahmen der Fernsteuereinrichtung oder der mechanischen Einstelleinrichtung ein Federelement zum Rückstellen des Spiegels vorgesehen ist. Im Zusammenspiel mit dem Bowdenzug wird so erreicht, dass der Spiegel sich selbständig wieder in eine Ruheposition zurückbewegen kann. Andererseits ist es grundsätzlich auch möglich, eine mechanische Fernsteuerung zu verwenden, die sowohl Zug- als auch Druckkräfte übertragen kann.

Grundsätzlich kann der Fahrschemel in beliebiger Weise ausgeführt sein. Vorteilhaft ist es, wenn er mit drei Rollen ausgeführt ist. Hierdurch wird eine Stabilität des Schemels erreicht, so dass er größtenteils unabhängig vom Untergrund nicht kippt, sondern stabil steht. Hierbei ist es bevorzugt, wenn eine Rolle im Bereich der Verbindung zwischen dem Fahrschemel und dem stielartigen Bedienelement vorgesehen ist, da hierdurch die Handhabung deutlich vereinfacht wird.

In einer vorteilhaften Ausführungsform ist der Fahrschemel in Art eines Tiefladers ausgeführt und weist eine ebene Fläche auf. Zu dieser ebenen Fläche ist der Spiegel wippenartig vorgesehen. Beispielsweise ist der Fahrschemel auf dieser Ebene mit Hilfe eines Gelenkes befestigt. Der Fahrschemel kann zum Beispiel derart ausgeführt sein, dass die Ebene in der Höhe der Achsen seiner Rollen liegt.

Durch eine derartige Konstruktion kann der Kontrollspiegel und insbesondere dessen Fahrschemel besonders flach ausgeführt werden, so dass nur ein geringer Abstand zwischen dem zu untersuchenden Unterboden und dem Boden, auf dem sich der Fahrschemel befindet, notwendig ist. Außerdem erleichtert ein größerer Abstand zwischen Spiegel und Unterboden auch die Übersichtlichkeit bei der optischen Kontrolle des Unterbodens, so dass die Bedienperson leichter kontrollieren kann, ob bestimmte Stellen des Unterbodens bereits untersucht wurden.

In einer bevorzugten Ausführungsform sind am Fahrschemel Beleuchtungsmittel vorgesehen. Diese sind derart angebracht, dass sie, wenn der Kontrollspiegel unter ein Fahrzeug geschoben wird, den Unterboden ausleuchten können, so dass eine bessere Kontrolle dieses Unterbodens möglich ist. Dies erleichtert auch den Einsatz in der Dämmerung oder nachts, da keine zusätzliche Beleuchtung benötigt wird.

Grundsätzlich kann die Energieversorgung der Beleuchtung am Fahrschemel vorgesehen sein. Vorteilhaft ist es jedoch, wenn Energiespeicher im stielartigen Bedienelement eingebaut sind und zur Energieversorgung der Beleuchtungsmittel verwendet werden. Hierbei kann das stielartige Bedienelement hohl ausgeführt sein, so dass der Energiespeicher leicht eingebracht werden kann. Bevorzugt ist es hierbei, wenn am dem Fahrschemel gegenüberliegenden Ende des stielartigen Bedienelementes eine Abdeckung vorgesehen ist, die abnehmbar ist und wodurch der Innenraum des stielartigen Bedienelementes mit Energiespeichern bestückbar ist.

Um den erfindungsgemäßen Kontrollspiegel nicht nur an stationären Kontrollstationen, beispielsweise im Eingangsbereich einer Botschaft, einsetzen zu können sondern auch flexibel bei temporär aufgebauten Kontrollstationen ist es bevorzugt, wenn der Fahrschemel oder das stielartige Bedienelement für einen platzsparenden Transport zerlegbar ausgeführt ist. Hierzu bietet es sich an, das stielartige Bedienelement als Teleskoprohr auszuführen, so dass es platzsparend verkleinert werden kann. Außerdem ist es denkbar, dass auch die Befestigung des stielartigen Bedienelementes am Fahrzeugschemel gelöst werden kann, wobei die Verbindung für die mechanische Fernbedienung sowie die Energieversorgung der Beleuchtungsmittel wahlweise bestehen bleiben kann oder auch trennbar ausgeführt sein kann.

Die Erfindung wird nachfolgend anhand eines Ausführungsbeispiels und schematischen Zeichnungen näher erläutert. In diesen Zeichnungen zeigen:
- Fig. 1: eine perspektivische Darstellung einer Ausführungsform des erfindungsgemäßen Kontrollspiegels; und
- Fig. 2: eine seitliche Ansicht des Kontrollspiegels gemäß Fig. 1.

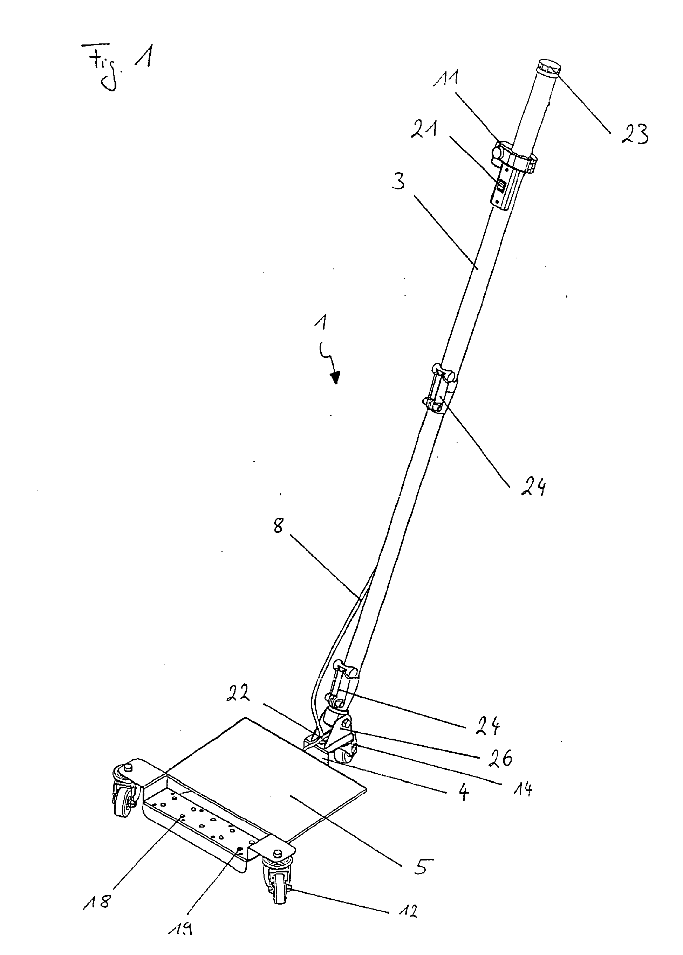

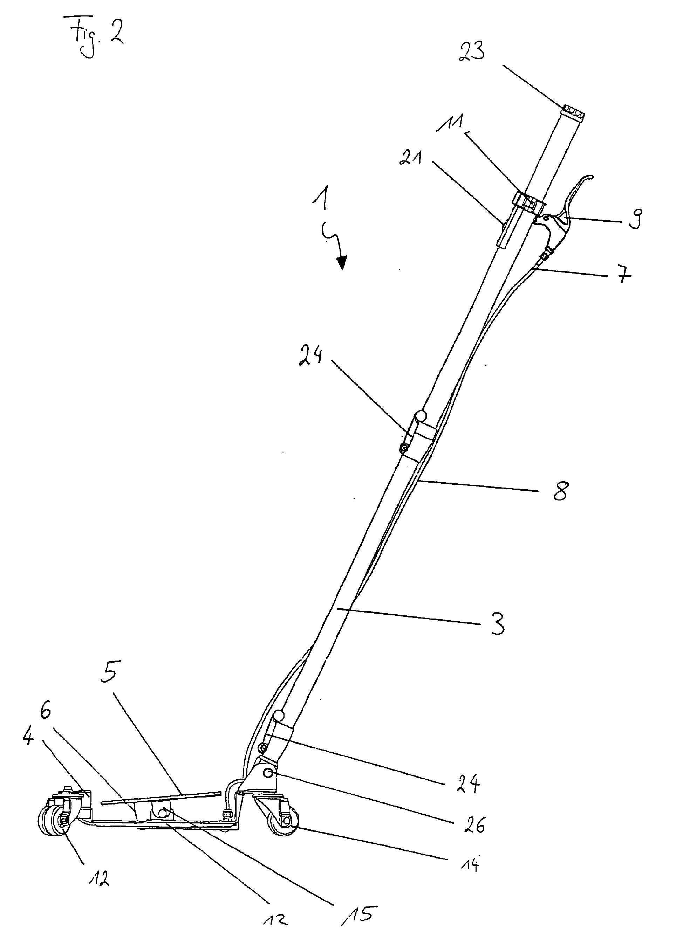

In den beiden Figuren 1 und 2 ist dieselbe Ausführungsform des erfindungsgemäßen Kontrollspiegels 1 dargestellt. Hierbei zeigt Fig. 1 eine perspektivische Ansicht, wohingegen Fig. 2 eine seitliche Ansicht darstellt. Im Folgenden wird auf die Ausführungsform des erfindungsgemäßen Kontrollspiegels 1 der beiden Figuren näher eingegangen.

Der erfindungsgemäße Kontrollspiegel 1 besteht im Wesentlichen aus einem stielartigen Bedienelement 3, welches in Form eines langen zylindrischen Rohres ausgeführt ist und einem Fahrschemel 4. Auf dem Fahrschemel 4 ist ein Spiegel 5 vorgesehen.

Der Fahrschemel 4 ist in dieser Ausführungsform mit drei Rollen 12, 14 ausgestattet, wobei eine Rolle 14 im Bereich der Verbindung zwischen dem stielartigen Bedienelement 3 und dem Fahrschemel 4 vorhanden ist. Der Fahrschemel 4 selbst weist, wie in der seitlichen Ansicht in Fig. 2 dargestellt, eine tiefladerähnliche Form in der seitlichen Ansicht auf. Hier ist zwischen den zwei vorderen Rollen 12 und der hinteren Rolle 14 eine versetzt angeordnete ebene Fläche 13 vorgesehen. Bei der gesamten Konstruktion des Fahrschemels 4, welcher beispielsweise aus rostfreiem VA-Stahl gefertigt sein kann, ist darauf geachtet, die Bauhöhe möglichst niedrig zu halten. In diesem Fall bildet die Anlenkung des Bedienelementes 3 den höchsten Punkt des Fahrschemels 4.

Auf der ebenen Fläche 13 befindet sich eine wippenartige Befestigung 15 des Spiegels 5. Hierdurch ist es möglich, den Spiegel 5 in Richtung der vorderen Rollen 12 bzw. der hinteren Rolle 14 zu neigen und dabei den Winkel zwischen dem Spiegel 5 und der ebenen Fläche 13 zu verändern.

Zur Steuerung dieser Veränderung des Winkels ist eine mechanische Einstelleinrichtung 6 vorgesehen, welche über eine mechanische Fernsteuereinrichtung 7 gesteuert wird. In der hier dargestellten Ausführungsform sind Teile der Fernsteuereinrichtung 7 wie auch Teile der mechanischen Einstelleinrichtung 6 durch einen Bowdenzug 8 ausgeführt.

Zur Betätigung des Bowdenzuges 8 ist im oberen Bereich des stielartigen Bedienelementes 3 ein Handgriffbügel 9 vorgesehen, der ähnlich eines Bremsgriffes für ein Fahrrad ausgeführt ist. Dieser Handgriffbügel 9 ist mit einer Befestigung 11 am stielartigen Bedienelement 3 angebracht. Durch ein Bewegen des Griffes des Handgriffes 9 in Richtung des stielartigen Bedienelementes 3 kann die Neigung des Spiegels beeinflusst werden, da am Bowdenzug 8 gezogen wird. Wird der Bügel des Handgriffbügels 9 wiederum losgelassen oder entfernt vom stielartigen Bedienelement 3 gehalten, so wird der Spiegel 5 in Richtung seiner Ruheposition zurückbewegt. Um ein Zurückkehren in die Ruheposition zu vereinfachen, kann ein Federelement im Rahmen der Fernsteuereinrichtung 7 und/oder der Einstelleinrichtung 6 vorgesehen sein.

Im vorderen Bereich des Fahrschemels 4 sind in Fig. 1 Beleuchtungsmittel 18 dargstellt. Hierbei sind die Beleuchtungsmittel 18 in einer Vertiefung des Fahrschemels 4 vorgesehen. Die Beleuchtungsmittel 18 sind in dieser Ausführungsform als zehn LEDs 19 ausgeführt, wobei auch mehr oder weniger LEDs verwendet werden können.

Bei dem normalen Einsatz des Kontrollspiegels 1 und der standardmäßig vorgesehenen Neigungsmöglichkeit des Spiegels 1 befindet sich der Teil des Unterbodens des zu kontrollierenden Fahrzeuges, der untersucht wird, meist in Richtung der vorderen Rollen 12 oder sogar noch weiter vorne als diese. Daher ist das Vorsehen der Beleuchtungsmittel 18 vor dem Spiegel 5 vorteilhaft, um den Bereich, der kontrolliert werden soll, auszuleuchten. Hierbei sind die Beleuchtungsmittel 18 derart dimensioniert, dass sie zumindest den zu untersuchenden Bereich des Unterbodens eines Fahrzeuges über dem Spiegel 5 des Kontrollspiegels 1 zuverlässig und ausreichend ausleuchten können.

Zur Stromversorgung der Beleuchtungsmittel 18 sind hier nicht dargestellte Akkus oder Batterien vorgesehen. Diese werden in dem hohl ausgeführten Oberteil des stiel- oder stabartigen Bedienelementes 3 eingebracht, in dem die Verschlusskappe 23 entfernt wird. Unterhalb der Befestigung 11 des Handgriffbügels 9 ist ein Schalter 21, welcher hier als Wippschalter ausgeführt ist, vorgesehen. Grundsätzlich kann aber auch eine andere Schalterart verwendet werden. Dieser dient dazu, die Beleuchtungsmittel 18 an- und auszuschalten. Die elektrische Energie der Energiespeicher wird über eine Energieverbindung 22 zu den Beleuchtungsmitteln 18 auf dem Fahrschemel 4 geleitet. Der Bereich des stielartigen Bedienelementes 3 an dem der Schalter 21 und der Handgriffbügel 9 befestigt sind, kann auch als Bedienkopf bezeichnet werden.

Um den Transport des erfindungsgemäßen Kontrollspiegels 1 zu erleichtern, ist dieser zerlegbar ausgeführt. Hierzu kann das stielartige Bedienelement 3 nach Lösen der Klemmen 24 teleskopartig ineinander geschoben werden kann. Außerdem kann das Bedienelement 3 an der Gelenkverbindung 26 vom Fahrschemel 4 gelöst werden.

Mit dem erfindungsgemäßen Kontrollspiegel ist es somit möglich, eine zuverlässige Kontrolle von Fahrzeugböden durchzuführen, ohne ein besonderes Augenmerk auf die Bedienung des Kontrollspiegels selbst zu legen.

## Patentansprüche

1. Kontrollspiegel (1), insbesondere für Fahrzeugunterböden,
mit einem stielartigen Bedienelement (3), einem Fahrschemel (4) und einem Spiegel (5),
wobei der Spiegel (5) auf dem Fahrschemel (4) vorgesehen ist und das Bedienelement (3) gelenkig mit dem Fahrschemel (4) verbunden ist,
**dadurch gekennzeichnet,**
**dass** der Spiegel (5) an dem Fahrschemel (4) wippenartig angelenkt ist, dass zum Variieren eines Winkels zwischen dem Spiegel (5) und dem Fahrschemel (4) eine mechanische Einstelleinrichtung (6) vorhanden ist, und
**dass** zum Bedienen der Einstelleinrichtung eine mechanische Fernsteuereinrichtung (7) vorgesehen ist.

2. Kontrollspiegel nach Anspruch 1,
**dadurch gekennzeichnet,**
**dass** die mechanische Fernsteuereinrichtung (7) einen Bowdenzug (8) aufweist.

3. Kontrollspiegel nach Anspruch 1 oder 2,
**dadurch gekennzeichnet,**
**dass** am stielartigen Bedienelement (3) ein Handgriffbügel (9) zur Betätigung der mechanischen Fernsteuereinrichtung (7) vorgesehen ist.

4. Kontrollspiegel nach einem der Ansprüche 1 bis 3,
**dadurch gekennzeichnet,**
**dass** das Bedienelement (3) winkelverstellbar relativ zum Fahrschemel (4) vorgesehen ist.

5. Kontrollspiegel nach einem der Ansprüche 1 bis 4,
**dadurch gekennzeichnet,**
**dass** die Fernsteuereinrichtung (7) ein Federelement zum Rückstellen des Spiegels (5) aufweist.

6. Kontrollspiegel nach einem der Ansprüche 1 bis 5,
**dadurch gekennzeichnet,**
**dass** der Fahrschemel (4) mit drei Rollen (12) ausgeführt ist.

7. Kontrollspiegel nach einem der Ansprüche 1 bis 6,
**dadurch gekennzeichnet,**
**dass** der Fahrschemel (4) in Art eines Tiefladers ausgeführt ist und eine ebene Fläche (13) aufweist und
**dass** der Spiegel (5) wippenartig zur ebenen Fläche (13) vorgesehen ist.

8. Kontrollspiegel nach einem der Ansprüche 1 bis 7,
**dadurch gekennzeichnet,**
**dass** am Fahrschemel (4) Beleuchtungsmittel (18) vorgesehen sind.

9. Kontrollspiegel nach einem der Ansprüche 1 bis 8,
**dadurch gekennzeichnet,**
**dass** ein Energiespeicher im stielartigen Bedienelement (3) zur Energieversorgung der Beleuchtungsmittel (18) vorhanden ist.

10. Kontrollspiegel nach einem der Ansprüche 1 bis 9,
**dadurch gekennzeichnet,**
**dass** das stielartige Bedienelement (3) als Teleskoprohr ausgeführt ist.

11. Kontrollspiegel nach einem der Ansprüche 1 bis 10,
**dadurch gekennzeichnet,**
**dass** der Fahrschemel (4) und/oder das stielartige Bedienelement (3) für einen platzsparenden Transport zerlegbar ausgeführt sind.
